# EUROPÄISCHE PATENTSCHRIFT

(11) **EP 2 477 937 B1**
(45) Veröffentlichungstag und Bekanntmachung des Hinweises auf die Patenterteilung: **30.03.2022**
(21) Anmeldenummer: 10751671.8
(22) Anmeldetag: 09.09.2010
(51) Int. Cl.: B67C 7/00, B67C 3/22, B65G 47/84

(54) **VORRICHTUNG ZUM HERSTELLEN VON FLÜSSIGKEITSBEHÄLTNISSEN**
DEVICE FOR PRODUCING CONTAINERS FOR LIQUID
DISPOSITIF DE FABRICATION DE RÉCIPIENTS POUR LIQUIDES

(30) Priorität: 14.09.2009 DE 102009041160
(43) Veröffentlichungstag der Anmeldung: 25.07.2012
(73) Patentinhaber: Krones AG, 93073 Neutraubling (DE)
(72) Erfinder: KLENK, Christoph, 93173 Wenzenbach (DE)
(74) Vertreter: Bittner, Bernhard
(86) Internationale Anmeldenummer: PCT/EP2010/063202
(87) Internationale Veröffentlichungsnummer: WO 2011/029856

(56) Entgegenhaltungen:
- EP-A1- 1 714 939
- WO-A1-98/22374
- WO-A1-98/47770
- DE-A1- 19 819 731
- DE-A1-102004 053 663
- DE-A1-102006 053 193
- DE-A1-102008 008 528
- DE-U1-202005 002 470
- DE-U1-202007 017 932
- US-A- 5 893 700

## Beschreibung

Die vorliegende Erfindung bezieht sich auf eine Vorrichtung zum Herstellen von Flüssigkeitsbehältnissen. Derartige Vorrichtungen sind aus dem Stand der Technik seit langem bekannt. Dabei ist es insbesondere bekannt, dass während eines Herstellungsvorganges zunächst Behältnisse, wie beispielsweise Kunststoffbehältnisse in einem Umformungsvorgang hergestellt und anschließend mit einem Getränk befüllt werden. Abgesehen von diesen Grundgegebenheiten sind jedoch derartige Herstellungsanlagen für Getränkebehältnisse höchst unterschiedlich. So erfordern unterschiedliche Getränke, beispielsweise Mineralwässer oder Säfte stark unterschiedliche Reinheitsgrade bzw. Sterilisierungsstufen. Auch die Art der Etikettierung von Behältnissen ist sehr unterschiedlich und kann beispielsweise durch Anbringen von Selbstklebeetiketten oder auch durch Anbringen von Etiketten mittels Beleimung erfolgen. Weiterhin sind auch die unterschiedlichsten Verfahren bekannt, um die Behältnisse selbst zu sterilisieren. Aus diesem Grunde sind derartige Vorrichtungen stets als Sondermaschinen anzusehen, die damit einen sehr hohen Herstellungsaufwand erfordern.

Eine Vorrichtung gemäß dem Oberbegriff des Anspruchs 1 ist dem Anmelder bekannt. Die WO 98/47770 A1 offenbart eine Vorrichtung zum Blasformen, Füllen und Verschließen von Behältern. Dabei werden die Behälter einem Ofen zugeführt und dort erwärmt, anschließend durch ein Transferrad einer Blasformvorrichtung zugeführt und von dieser durch ein weiteres Transferrad abgeführt. Durch das Transferrad werden die Behälter einem Sterilisator zugeführt und von diesem durch ein Sternrad an eine Befüllungsvorrichtung weiterbefördert. An diese Befüllungsvorrichtung schließt sich ein weiteres Sternrad an, das die Behältnisse abführt. Dabei weist der Sterilisator ebenso Greifeinrichtungen zum Transportieren der Behältnisse auf.

Der vorliegenden Erfindung liegt daher die Aufgabe zugrunde, eine Vorrichtung zur Verfügung zu stellen, welche mit vergleichsweise geringem Aufwand an unterschiedlichste Gegebenheiten, wie beispielsweise unterschiedlichste räumliche Gegebenheiten aber auch unterschiedliche Konzeptionierungen angepasst werden kann. Dies wird erfindungsgemäß durch eine Vorrichtung nach Anspruch 1 erreicht.

Eine weitere Aufgabe der vorliegenden Erfindung besteht darin, ein Verfahren zur Verfügung zu stellen, mit dem auf Grundlage von bestimmten Informationen, beispielsweise Kundeninformationen, eine entsprechende Anlage zusammengestellt werden kann.

Eine erfindungsgemäße Vorrichtung zum Herstellen von Flüssigkeitsbehältnissen weist eine Umformungseinheit auf, um Kunststoffvorformlinge zu Kunststoffbehältnissen umzuformen. Weiterhin ist eine Fülleinheit zum Befüllen der Kunststoffbehältnisse mit einem flüssigem Medium und insbesondere einem Getränk vorgesehen, wobei die Fülleinheiten in einer Transportrichtung der Kunststoffbehältnisse stromabwärts bezüglich der Umformungseinheit angeordnet ist und wobei die Umformungseinheit einen Zuführbereich zum Zuführen der Kunststoffvorformlinge aufweist sowie einen Abführbereich, um die umgeformten Kunststoffbehältnisse aus der Umformungseinheit abzuführen. Weiterhin weist die Fülleinheit einen Zuführbereich zum Zuführen der Kunststoffbehältnisse an die Fülleinheit auf sowie einen Abführbereich um die mit einer der Flüssigkeit befüllten Kunststoffbehältnisse aus der Fülleinheit abzuführen.

Zwischen dem Abführbereich der Umformungseinheit und dem Zuführbereich der Fülleinheit ist unter anderem wenigstens eine als Schnittstelle dienende Transporteinrichtung angeordnet, welche die Kunststoffbehältnisse -bevorzugt in einem Transportstrom - wenigstens abschnittsweise und vereinzelt zwischen der Umformungseinheit und der Fülleinheit transportiert, wobei die Transporteinrichtung derart ausgebildet ist, dass zwischen der Umformungseinheit und der Fülleinheit wenigstens eine weitere Einheit zum Behandeln der Behältnisse in die Vorrichtung einfügbar ist und wobei diese weitere Einheit derart an die Transporteinrichtung anbindbar ist, dass der Transportstrom zwischen der Umformungseinheit und der Fülleinheit über die weitere Einheit verläuft, d.h. die Behältnisse wenigstens zeitweise auch von Greifelementen, welche dieser weiteren Einheit zugeordnet sind, gegriffen bzw. transportiert werden. Auf diese Weise wird ein Behandeln der Behältnisse durch die weitere Einheit ermöglicht.

Es wird daher ein modularer Aufbau der erfindungsgemäßen Vorrichtung vorgeschlagen, wobei eine Transporteinrichtung zwischen der Umformungseinheit und der Fülleinheit gleichzeitig als Schnittstelle für im Wesentlichen beliebige weitere Geräte, wie beispielsweise Sterilisationseinheiten dient. Diese Transporteinrichtung ist daher bevorzugt in der Lage, nicht nur die Behältnisse von der Umformungseinheit an die Fülleinheit weiterzuleiten, sondern auch in der Lage, eine Synchronisation zwischen der Umformungseinheit und der Fülleinheit zu bewirken.

Die Vorrichtung weist mehrere Transporteinrichtungen der oben beschrieben Art auf, wobei diese Transporteinrichtungen im Wesentlichen gleichartig ausgebildet sind. Auf diese Weise ist ein modularer Aufbau der gesamten Anlage mit einer Vielzahl von Anlagenteilen möglich. Dabei ist es möglich, dass die Transporteinrichtungen identisch aufgebaut sind, es wäre jedoch auch möglich, dass sie sich hinsichtlich Merkmalen, wie dem Teilkreisradius eines Transportpfades für die Behältnisse, unterscheidet.

Vorzugsweise weist die Vorrichtung eine Steuerungseinrichtung zum Steuern der Umformungseinheit und der Fülleinheit auf. Dabei kann auch die besagte Transporteinrichtung in eine Steuerung durch diese Steuerungseinrichtung eingebunden werden.

Bei einer weiteren vorteilhaften Ausführungsform weist die Transporteinrichtung eine Antriebseinrichtung auf sowie bevorzugt auch einen Steuerungseingang, der mit einem Steuerungsausgang der besagten Steuerungseinrichtung verbindbar ist, um die Transporteinrichtung in die gesamte Vorrichtung einzubinden. Damit ist genauer gesagt die Transporteinrichtung bzw. deren Antrieb in die Gesamtsteuerung einbindbar. Grundsätzlich wäre es auch denkbar, als gemeinsame Antriebseinrichtung eine sogenannte Königswelle einzusetzen, welche wiederum die einzelnen Anlageteile betreibt. Bevorzugt ist jedoch eine hier beschriebene Steuerung vorgesehen. Bei dieser eigenen Antriebseinrichtung handelt es sich um einen Servomotor. Durch diese Ausgestaltung ist die Transporteinrichtung von den übrigen Anlagenteilen entkoppelbar, was insbesondere auch im Falle einer Störung oder bei Wartung- und Servicefällen von Bedeutung ist.

Bei einer weiteren vorteilhaften Ausführungsform weist die Transporteinrichtung eine Vielzahl von an einem um eine vorgegebene Drehachse drehbaren Träger angeordneten Greifelementen zum Greifen der Behältnisse auf, wobei diese Greifelemente wenigstens teilweise steuerbar sind. Diese Greifelemente greifen dabei bevorzugt die Behältnisse an einem Halsbereich bzw. unterhalb eines hierfür vorgesehenen Tragrings. Dabei sind wenigstens einige dieser Greifelemente, jedoch bevorzugt sämtliche Greifelemente, steuerbar bzw. aktiv ausgeführt. Es ist jedoch auch möglich, dass diese Greifelemente von einer aktiven Steuerung auf eine passive Steuerung umschaltbar sind, dass also die einzelnen Greifelemente sowohl aktiv als auch passiv wirken können. Durch diese Vorgehensweise ist die Transporteinrichtung auf unterschiedliche Anlagetypen anwendbar und kann je nach Bedarf eingesetzt werden.

Bei einer weiteren vorteilhaften Ausführungsform sind die Greifelemente in Abhängigkeit von einer Drehstellung des Trägers bezüglich der Drehachse steuerbar, wobei vorgegebene Steuerungspositionen bezüglich der Drehstellung des Trägers frei wählbar sind. Genauer gesagt kann bei dieser Ausführungsform festgelegt werden, bei welchen Winkelstellungen sich beispielsweise ein entsprechendes Greifelement öffnen und bei welchen Winkelstellungen es sich schließen soll. Durch diese freie Wählbarkeit der Winkelpositionen werden ebenfalls die Einsatzmöglichkeiten für die entsprechenden Greifelemente erhöht. Damit ist beispielsweise ein Öffnen und Schließen des jeweiligen Greifelementes bei jedem beliebigen Winkel denkbar. Bevorzugt erfolgt das Öffnen bzw. Schließen des Greifelementes durch einen elektrischen Antrieb.

Bevorzugt ist die Antriebseinrichtung teilungsvariabel d.h. sie kann auch unter den unterschiedlichsten geometrischen Gegebenheiten eingesetzt werden.

Vorzugsweise werden damit die Behältnisse mit den Greifelementen auf einer vorgegebenen Kreisbahn befördert, wobei die Transporteinrichtung auch eine Einstellung eines Krümmungsradiusses dieser Kreisbahn ermöglicht. Dies kann beispielsweise dadurch geschehen, dass eine Schwenkstellung der Greifelemente bezüglich des Trägers variabel ist oder auch das die einzelnen Greifelemente in einer radialen Richtung aus- bzw. eingefahren werden können.

Bei einer weiteren vorteilhaften Ausführungsform ist an dem Zuführbereich und dem Abführbereich der Umformungseinheit sowie an dem Zuführbereich und dem Abführbereich der Fülleinheit jeweils eine Transporteinrichtung angeordnet, wobei diese Transporteinrichtungen jeweils gleichartig ausgebildet sind. Unter einer gleichartigen Ausbildung wird hier einerseits verstanden, dass diese vollkommen identisch ausgebildet sind, unter gleichartig werden jedoch auch Transporteinrichtungen verstanden, bei denen jeweils Transportbahnen mit unterschiedlichen Radien darstellbar sind.

Zwischen der Umformungseinheit und der Fülleinheit ist wenigstens eine Sterilisationseinheit zum Sterilisieren der Behältnisse mittels wenigstens zwei gleichartigen Transporteinrichtungen eingebunden. Bei dieser Sterilisationseinheit kann es sich bevorzugt um eine Sterilisationseinheit handeln, die mittels eines Elektronenstrahls (E-Beam) die Behältnisse sterilisiert. Damit schließt sich die Sterilisationseinheit nicht unmittelbar an die Umformungseinheit oder die Fülleinheit an, sondern zwischen diesen Aggregaten befindet sich jeweils eine Transporteinrichtung.

Bei einer weiteren vorteilhaften Ausführungsform weist die Transporteinrichtung einen separaten Transportpfad zum Transportieren der Behältnisse auf. Dies bedeutet, dass der Transportpfad, auf dem die Behältnisse mit der Transporteinrichtung gefördert werden, nicht in andere Transportpfade eingebunden ist. So ist beispielsweise in diesem Fall keine durchgängige Transportkette vorgesehen, welche die Umformungseinheit mit der Fülleinheit verbindet, sondern der Transportweg wird durch einen separaten Transportpfad der Transporteinrichtung unterbrochen. Vorzugsweise weisen auch die anderen Vorrichtungen, wie beispielsweise die Fülleinheit und die Umformungseinheit jeweils separate Transportpfade auf. Durch diese Vorgehensweise können die Vorrichtungen an unterschiedlichste Gegebenheiten angepasst werden. Vorzugsweise handelt es sich bei der Transporteinrichtung, wie oben erwähnt, um einen Transportstern.

Die Vorrichtung ist mit beliebigen Behandlungseinheiten zum Behandeln von Behältnissen unter Verwendung im Wesentlichen gleichartiger Transporteinrichtungen der oben beschriebenen Art zusammengestellt. Damit ist es möglich, einen Transportstrom der Behältnisse an im Wesentlichen beliebigen Stellen zu unterbrechen, um beispielsweise weitere Aggregate einzuführen oder je nach Bedarf Aggregate aus der Vorrichtung herauszunehmen. Damit weist bevorzugt jedes Behandlungsaggregat der Vorrichtung einen separaten Transportpfad für die Behältnisse auf.

In die Vorrichtung ist eine Etikettlereinrichtung zum Etikettieren von Kunststottbehältnissen integriert.

Daneben können jedoch auch andere Anlagen, wie weitere Sterilisationseinheiten, Wascheinheiten für die Behältnisse und dergleichen integriert werden.

Bei einer weiteren vorteilhaften Ausführungsform ist in wenigstens einem Zuführbereich oder wenigstens einem Abführbereich eine Transporteinrichtung zum Transportieren der Behältnisse angeordnet. Bei dieser weiteren Transporteinrichtung kann es sich beispielsweise um ein Transportband oder dergleichen handeln.

Die vorliegende Erfindung ist weiterhin auf ein Verfahren zum Zusammenstellen einer Vorrichtung der oben beschriebenen Art gerichtet. Dabei wird in einem ersten Verfahrensschritt eine bestimmte Produktanforderung vorgegeben, anschließend werden für diese bestimmte Produktanforderungen die nötigen Komponenten ermittelt und Informationen einem Nutzer ausgegeben, welche für die benötigten Komponenten charakteristisch sind, wobei diese Informationen auf Grundlage der Produktanforderung ermittelt werden. Bei der bestimmten Produktanforderung kann es sich beispielsweise um die Gattung eines abzufüllenden Getränks oder einen bestimmten Sterilisationsgrad handeln.

Damit enthält bevorzugt die besagte Produktanforderung wenigstens einen Parameter, der für einen Reinheitsgrad im Inneren der herzustellenden Behältnisse charakteristisch ist. So kann beispielsweise an den Benutzer die Information ausgegeben werden, welche Aggregate zwingend zu verwenden sind, welche Aggregate optional und welche Alternativaggregate ebenfalls verwendbar sind. Weiterhin kann angegeben werden, welche und gegebenenfalls wie viele Transporteinrichtungen der oben erwähnten Art eingesetzt worden sind. Bei den besagten Produktanforderungen kann es sich, wie oben erwähnt, um die Gattung eines abzufüllenden Getränkes handeln oder auch beispielsweise um die Beschaffenheit einer Außenwand der Behältnisse, beispielsweise deren Dicke oder auch weitere Eigenschaften. Weiterhin kann es sich bei den Produktanforderungen auch um räumliche Gegebenheiten für eine entsprechende Vorrichtung handeln.

Weitere Ausführungsformen und Vorteile ergeben sich aus den beigefügten Zeichnungen: Darin zeigen:
- Fig. 1: Eine erfindungsgemäße Vorrichtung in einer ersten Ausführungsform;
- Fig. 2: eine schematische Darstellung einer erfindungsgemäßen Vorrichtung zur Darstellung möglicher Anlagenteile;
- Fig. 3: eine erste Ausführungsform einer erfindungsgemäßen Transporteinrichtung; und
- Fig. 4: eine weitere Ausführungsform einer erfindungsgemäßen Transporteinrichtungen.

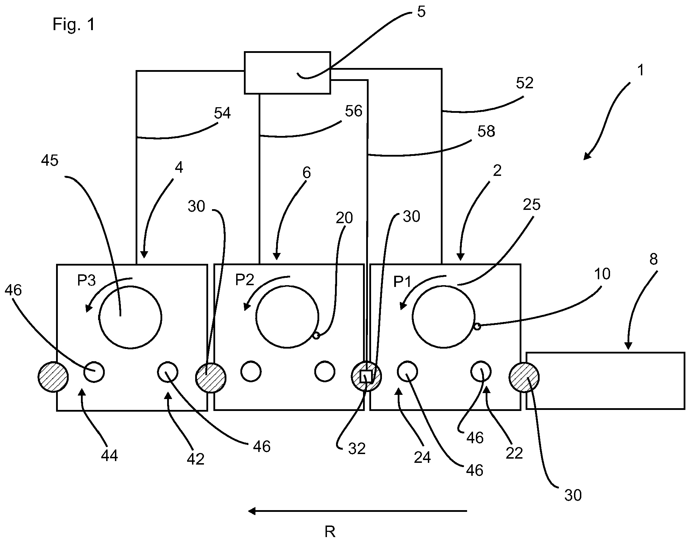

Fig. 1 zeigt eine erfindungsgemäße Vorrichtung in einer ersten Ausführungsform. Diese Vorrichtung 1 weist eine Umformungseinheit 2 auf, welche die Vorformlinge 10 zu Behältnissen 20 umformt. Dabei handelt es sich bevorzugt um eine Streckblasmaschine, welche die Vorformlinge durch Beaufschlagung mit Luftdruck zu Behältern umformt. Vor dieser Umformungseinheit d.h. hier in der Transportrichtung R stromaufwärts befindet sich eine Erwärmungseinheit für die Vorformlinge, wie beispielsweise ein Ofen 8. An diese Umformungseinheit 2 schließt sich eine Sterilisationseinheit 6 an, mit deren Hilfe die nunmehr umgeformten Behältnisse 20 sterilisiert werden. Dabei wird insbesondere eine Innensterilisation der Behältnisse 20 vorgenommen. Zu diesem Zweck kann die Sterilisationseinheit 6 beispielsweise Strahlfinger oder dergleichen aufweisen, welche in die Behältnisse 20 eintauchen und auf diese Weise deren Innenwandung sterilisieren. An diese Sterilisationseinheit 6 schließt sich eine Fülleinheit 4 an, in der die nunmehr sterilisierten Behältnisse mit einer Flüssigkeit, wie beispielsweise einem Getränk befüllt werden.

Dabei weist die Umformungseinheit 2 sowohl einen Zuführbereich 22 für die Vorformlinge als auch einen Abführbereich 24 für die Behältnisse auf. In diesem Zuführbereichen bzw. Abführbereichen können Transportelemente 46 vorgesehen sein, welche die jeweiligen Behältnisse einem zentralen Trägerrad 25 zuführen. Entsprechend weist auch die Fülleinheit einen Zuführbereich 42 und einen Abführbereich 44 zum Zuführen bzw. Abführen der nunmehr befüllten Behältnisse auf.

Auch in diesen Bereichen können wiederum Transportelemente 46 sowie ein Trägerrad 45 vorgesehen sein. Dabei ist zu beachten, dass sowohl die Umformungseinheit 2 als auch die Fülleinheit 4 jeweils eine Vielzahl von Greifelementen für die Behältnisse aufweist, wobei beispielsweise diese Greifelemente auf dem Trägerrad 25 angeordnet sind und sich damit auf einer geschlossenen Kreisbahn (entlang des Pfeils P1) bewegen. Entsprechend sind auch die Greifelemente der Fülleinheit 4 auf einem Trägerrad 45 angeordnet und bewegen sich damit ebenfalls auf einer geschlossenen Kreisbahn (Pfeil P2).

Ein bedeutsamer Aspekt für die vorliegende Erfindung ist diese Trennung der einzelnen Greifelemente der unterschiedlichen Anlagenteile. Damit wird nicht, wie im Stand der Technik zum Teil üblich, eine durchgehende Transportkette verwendet, welche die Behältnisse von einer Einheit zur nächsten bewegt, sondern jede Einheit weist ihre eigenen separaten Greifelemente für die Behältnisse auf. Damit verbleibt jedes Greifelement im Bereich desjenigen Anlagenteils, dem es zugeordnet ist. Sowohl die mechanischen als steuerungsseitigen Verbindungen zwischen den Transporteinrichtungen 30 und den übrigen Anlagenteilen, wie der Fülleinheit und der Umformungseinheit sind mit vergleichsweise geringem Aufwand trennbar.

Zwischen der Umformungseinheit 2, der Sterilisationseinheit 6 und der Fülleinheit 4 sind jeweils I ransporteinrichtungen 30 angeordnet. Mittels dieser I ransporteinrichtungen 30, die jeweils ebenfalls ein abgeschlossenes System von Greifklammern aufweisen, werden die Behältnisse von jeweils einer Einheit zur nächsten Einheit transportiert. Dabei sind diese Transporteinheiten 30 austauschbar, so dass die unterschiedlichsten Module miteinander über die jeweiligen Transporteinheiten 30 kombiniert werden können. Die einzelnen Transporteinheiten 30 weisen jeweils Antriebselemente 32 in Form von Servomotoren auf.

Das Bezugszeichen 5 bezieht sich auf eine zentrale Steuerungseinrichtung für die gesamte Anlage. Diese Steuerungseinrichtung steht jeweils in Kommunikationsverbindung 52, 54 und 56 mit der Umformungseinheit 2, der Sterilisationseinheit 6 und der Fülleinheit 4. Über diese Kommunikationsverbindungen werden diese besagten Einheiten bzw. deren Antriebe aufeinander synchronisiert. Über eine weitere Kommunikationsverbindung 58 steht die zentrale Steuerungseinrichtung auch mit der Antriebseinheit 32 der Transporteinrichtung 30 und (nicht gezeigt) auch mit den Antriebseinheiten der weiteren Transporteinrichtungen 30 in Kommunikationsverbindung. Auf diese Weise ist es auch möglich, eine Vielzahl von Transporteinrichtungen 30 in die Gesamtsteuerung einzubinden, wobei die Position dieser Transporteinrichtungen von den Gegebenheiten der Gesamtanlage abhängt. Das Bezugszeichen R kennzeichnet die Transportrichtung der Behältnisse

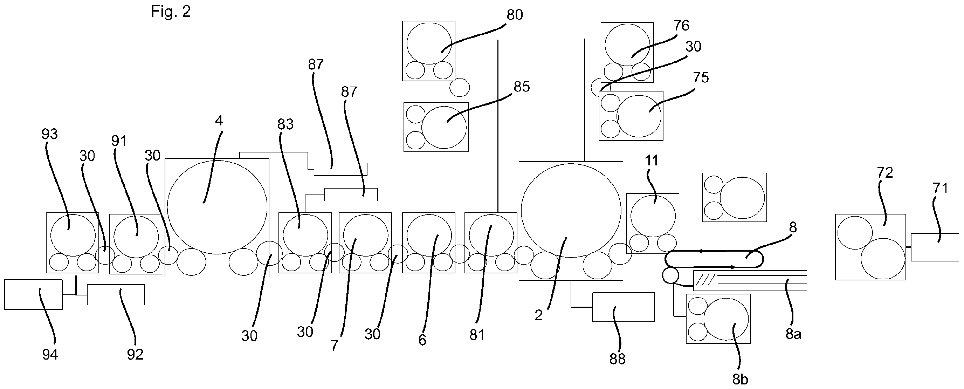

Fig. 2 zeigt eine Darstellung zur Veranschaulichung möglicher Anlagenkombinationen. Dabei sind unterschiedliche Anlagenteile gezeigt, die in derartigen Maschinen zum Einsatz kommen können, wobei die vorliegende Erfindung eine im Wesentlichen beliebige und auf den Einsatzzweck abgestimmte Kombination dieser Anlagenteile erlaubt.

Das Bezugszeichen 71 bezieht sich auf eine Herstellungseinheit zum Herstellen von Vorformlingen. Dabei ist weiterhin eine Kunststoffzuführungseinheit 72 vorgesehen, welche der Herstellungseinheit 71 den Kunststoff zuführt. Die so hergestellten Kunststoffvorformlinge können einer Heizeinrichtung 8 zugeführt werden. Anstelle oder neben der Heizeinrichtung 8 können jedoch auch andere Heizeinrichtungen, wie etwa ein Mikrowellenofen 9 eingesetzt werden, wobei in einen derartigen Mikrowellenofen 9 auch Sterilisationseinheiten zum Sterilisieren der Vorformlinge verwendet werden können. Bei diesen Sterilisationseinheiten kann es sich beispielsweise um Elektronenstrahlenmodule, UV- Module oder auch Sterilisationseinheiten handeln, welche mittels Wasserstoffperoxid sterilisieren. An dem Ofen 8 kann eine Vorformlingzuführungseinheit in Form einer Rolleneinheit 8a oder auch in Form einer Scheibenzuführung 8b vorgesehen sein.

Auch ist es möglich, dass sich an den Ofen 8 eine weitere Sterilisationseinheit 11 der oben beschriebenen Art anschließt. Dabei kann diese Sterilisationseinheit 11 direkt an den Ofen angebunden werden, es wäre jedoch auch möglich, dass die Anbindung über eine Transporteinrichtung 30 erfolgt. An die Umformungseinheit 2 bzw. das Blasmodul 2 kann beispielsweise eine Robotereinheit 88 für einen automatischen Formenwechsel angebunden sein. Daneben können an die Umformungseinheit 2 auch eine Etikettiereinheit 76 und/oder eine Puffereinheit 75 angebunden sein, wobei die Anbindung wieder mit Hilfe einer erfindungsgemäßen Transporteinrichtung erfolgen kann. Das Bezugszeichen 80 bezieht sich ebenfalls auf eine Etikettiereinheit und das Bezugszeichen 85 auf eine Puffereinheit. Dies bedeutet, dass ein Etikettieren der Behältnis zu unterschiedlichen Zeitpunkten während des Herstellungsprozesses möglich ist.

Stromabwärts nach der Umformungseinheit 2 kann in dem Prozess eine Beschichtungseinheit 81 eingebunden sein sowie auch die bereits erwähnten Sterilisationseinheiten 6 und 7. Das Bezugszeichen 83 bezieht sich auf eine Dosageeinheit, an die Ventilknoten 87 angebunden sein können. Auch an der Fülleinheit 4 können derartige Ventilknoten 87 angebunden sein. Die Bezugszeichen 6 und 7 kennzeichnen weitere Sterilisationseinheiten. Stromabwärts bezüglich der Fülleinheit 4 kann eine Einspritzungseinheit 91 für beispielsweise Stickstoff vorgesehen sein sowie eine Verschließeinheit 93 zum Verschließen der befüllten Behältnisse mit Verschlüssen.

Auch diese Verschließeinheit 93 kann dabei integrierte Sterilisationseinheiten aufweisen. Das Bezugszeichen 92 bezieht sich auf eine Verschlusszuführeinheit für Behältnisverschlüsse und das Bezugszeichen 94 auf eine Sterilisationseinheit für die Behältnisverschlüsse.

Man erkennt daher, dass je nach den technischen Anforderungen die unterschiedlichsten Einheiten miteinander kombiniert werden können. Durch die jeweils zwischen den Einheiten vorgesehenen Transporteinrichtungen 30 ist es möglich, diese Anlageneinheiten beliebig zusammenzustellen. Wie in Fig. 2 angedeutet, weisen dabei die einzelnen Transporteinrichtungen 30 teilweise unterschiedliche Teilkreisradien auf, bzw. unterschiedliche Bahnen, entlang deren die Behältnisse transportiert werden. Dabei sind die Transporteinrichtungen 30 in der Lage, sowohl Vorformlinge als auch bereits geformte Behältnisse zu Transportieren.

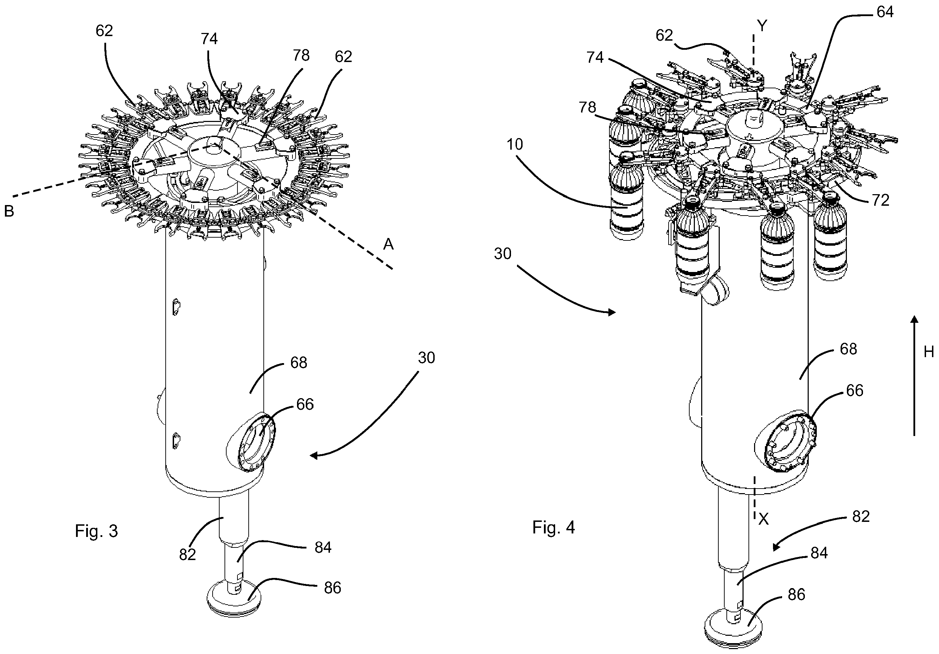

Die Figuren 3 und 4 zeigen je eine I ransporteinrichtung 30 in zwei verschiedenen Ausführungsformen. Dabei weisen beide Transporteinrichtungen 30 jeweils einen Träger bzw. ein Trägerrad 64 auf, an dem eine Vielzahl von Greifklammern 62 angeordnet ist. Dabei ist es möglich, dass die Greifklammern 62 in der Ebene dieser Trägerrads 64 schwenkbar um eine Schwenkachse Y sind, so dass auf diese Weise die Ubergabe von Behältnissen erleichtert werden kann oder auch der Radius einer Transportbahn für die Behältnisse 10 veränderbar ist.

Auch ist es, wie Eingangs erwähnt, möglich, dass die Greifelemente 62 in ihrer Gesamtheit in radialer Richtung gegenüber dem Trägerrad 64 verschoben werden. Auf diese Weise kann der Radius einer Transportbahn der Behältnisse verändert werden. Die Greifklammern sind dabei jeweils elektrisch und bevorzugt unabhängig voneinander ansteuerbar. Bevorzugt sind elektrisch betätigte Antriebselemente, wie insbesondere aber nicht ausschließlich Elektromotoren oder Elektromagneten, vorgesehen, um die Greifklammern zwischen einem geschlossenen und einem geöffneten Zustand zu schalten. Im Gegensatz zum Stand der Technik ist dabei bevorzugt keine Kurve vorgesehen, um die Greifeinrichtungen zu verstellen, sondern individuelle Antriebe für die einzelnen Greifelemente. Es wäre jedoch auch möglich, eine verstellbare Kurve vorzusehen.

Das Bezugszeichen 74 bezieht sich auf ein Befestigungselement zur Anordnung des Trägerrades an einem zentralen Antrieb 32. Über einen Verstellmechanismus 78 ist es auch möglich, die einzelnen Greifklammern in radialer Richtung zu verschieben. Das Bezugszeichen 68 bezieht sich auf ein Gehäuse, in dem die Antriebseinrichtung bzw. auch eine Antriebswelle für die Transporteinrichtung 30 angeordnet ist. Über eine Verbindungsstelle 66 kann die Transporteinrichtung 30 an weitere Elemente, wie beispielsweise die Umformungseinheit 2 oder die Fülleinheit 4, angebunden werden. Das Bezugszeichen 82 kennzeichnet in seinen Gesamtheit einen Standfuß, der ein teleskopartig ausfahrbares Element 84 aufweist sowie ein Bodenelement bzw. eine Bodenplatte 86. Dieses teleskopartige Element 84 ist dabei höhenverstellbar, so dass insgesamt die gesamte Transporteinrichtung bzw. die Greifklammern 30 in der Höhe H veränderbar sind.

Allgemein ist bevorzugt eine Höhe der Greifklammern 62 der Transporteinrichtung 30 veränderbar, so dass auch auf diese Weise leichter eine Anpassung an unterschiedliche Anlagengegebenheiten erfolgen kann. Über nicht gezeigte Steuerungseingänge bzw. -ausgänge kann die Transporteinrichtung 30 in eine Anlage steuerungsmäßig eingebunden werden.

Bei einer bevorzugten Ausführungsform ist der Träger 64 mit den Greifklammern 62 von dem Gehäuse 68 abnehmbar. Auf diese Weise kann für alle Transporteinrichtungen 30 das gleiche Grundgehäuse 68 verwendet werden und je nach Bedarf können unterschiedliche Träger (beispielsweise mit unterschiedlichen Anzahlen an Greifelementen oder mit unterschiedlichen Transportbahnradien) an dem Gehäuse 68 angeordnet werden. Auf diese Weise kann die Anzahl der Gleichteile für eine entsprechende Anlage erhöht werden. Dabei kann sich beispielsweise die Antriebseinrichtung 32 in dem Gehäuse befinden und es kann in dem Gehäuse ein einheitliches Anschlussmittel vorgesehen sein, mit dem unterschiedliche Träger 64 (beispielsweise mit unterschiedlichen Anzahlen von Greifklammern) verbunden werden können.

In Fig. 3 ist eine weitere Ausführungsform einer Transporteinrichtung 30 gezeigt. Man erkennt hier, dass im Vergleich der in Fig. 4 gezeigten Ausführungsform mehrere Greifeinrichtungen bzw. Greifklammern 62 vorgesehen sind und auch der Radius der Transportbahn dieser Greifeinrichtungen 62 größer ist als bei der in Fig. 4 gezeigten Ausführungsform. In diesem Falle handelt es sich bei den einzelnen Greifklammern 62 jeweils um gesteuerte Elemente, d.h. jede einzelne Greifklammer 62 kann hinsichtlich ihrer Öffnungs- und Schließstellung gesteuert werden. Dabei kann weiterhin frei gewählt werden, an welchen Winkelpositionen sich im Arbeitsbetrieb ein bestimmtes Greifelement 62 schließt und an welchen Stellen es sich öffnet.

So kann beispielsweise festgelegt werden , dass sich die Greifeinrichtungen 62 an der Position A in Umfangsrichtung schließen, um auf diese Weise ein Behältnis zu greifen, und sich an der Position B in Umfangsrichtung öffnen, um dieses Behältnis wieder abzugeben. Weiterhin erlaubt die Transporteinrichtung eine variable Transportgeschwindigkeit der Greifeinrichtungen bzw. des Trägers 64. Die jeweiligen Öffnungs- und Schließpositionen können dabei von der zentralen Steuerungseinrichtung vorgegeben werden. Es können auch weitere Öffnungs- und Schließpositionen sowie auch Öffnungs und Schließabschnitte frei definiert werden.

Auf diese Weise kann frei gewählt werden, an welchen Stellen im Laufe einer Drehung ein Behältnis von einem anderen Aggregat übernommen werden soll und an welchen Stellen es wieder an ein weiteres Aggregat übergeben werden soll. Auf diese Weise sind die Transporteinrichtungen variabel für unterschiedlichste Anlagen einsetzbar. Ein (nicht im Detail gezeigter Antriebsmotor ist für jede einzelne Transporteinrichtung 30 vorgesehen, wobei dieser Antriebsmotor und auch eine Steuerung für die einzelnen Greifklammern in ein Gesamtsteuerungskonzept die Anlage eingebunden werden kann.

### Bezugszeichenliste

- 1: Vorrichtung
- 2: Umformungseinheit
- 4: Fülleinheit
- 5: zentrale Steuerungseinrichtung
- 6: Sterilisationseinheit
- 8: Ofen
- 9: Mikrowellenofen
- 10: Vorformlinge
- 11: weitere Sterilisationseinheit
- 20: Behältnisse
- 22: Zuführbereich
- 24: Abführbereich
- 25,64: Trägerrad
- 30: Transporteinrichtung
- 32: Antriebselement
- 45: Trägerrad
- 46: Transportelemente
- 42: Zuführbereich
- 44: Abführbereich
- 52,54,56,58: Kommunikationsverbindung
- 62: Greifklammer
- 64: Träger
- 66: Verbindungsstelle
- 68: Gehäuse
- 71: Herstellungseinheit
- 72: Kunststoffzuführungseinheit
- 74: Befestigungselement
- 75, 85: Puffereinheit
- 76, 80: Etikettiereinheit
- 78: Verstellmechanismus
- 81: Beschichtungseinheit
- 82: Standfuß
- 83: Dosageeinheit
- 84: teleskopartiges Element
- 86: Bodenelement
- 87: Ventilknoten
- 88: Robotereinheit für Formenwechsel
- 91: Einspritzungseinheit
- 92: Verschlusszuführeinheit
- 93: Verschließeinheit
- 94: Sterilisationseinheit für Behältnisverschlüsse
- R: Transportrichtung
- H: Höhe
- A, B: Öffnungs- bzw. Schließpositionen für Greifklammern
- R: Transportrichtung der Kunststoffbehältnisse
- Y: Schwenkachse für Greifklammern 62

## Patentansprüche

1. Vorrichtung (1) zum Herstellen von Flüssigkeitsbehältnissen (10) mit einer Umformungseinheit (2), zum Umformen von Kunststoffvorformlingen (10) zu Kunststoffbehältnissen (20), und mit einer Fülleinheit (4) zum Befüllen der Kunststoffbehältnisse (20) mit einem flüssigen Medium, wobei die Fülleinheit (4) in einer Transportrichtung (R) der Kunststoffbehältnisse stromabwärts bezüglich der Umformungseinheit (2) angeordnet ist, wobei die Umformungseinheit (2) einen Zuführbereich (22) zum Zuführen der Kunststoffvorformlinge (10) aufweist, sowie einen Abführbereich (24), um die Kunststoffbehältnisse (20) aus der Umformungseinheit (2) abzuführen und wobei die Fülleinheit (4) einen Zuführbereich (42) zum Zuführen der Kunststoffbehältnisse (20) an die Fülleinheit (4) und einen Abführbereich (44) zum Abführen der Kunststoffbehältnisse (20) aus der Fülleinheit (4) aufweist,
**dadurch gekennzeichnet, dass**
zwischen dem Abführbereich (24) der Umformungseinheit (2) und dem Zuführbereich (42) der Fülleinheit (4) mehrere als Schnittstelle dienende Transporteinrichtungen (30) angeordnet sind, welche die Kunststoffbehältnisse (20) wenigstens abschnittsweise und vereinzelt zwischen der Umformungseinheit (2) und der Fülleinheit (4) transportieren, wobei jede Transporteinrichtung eine eigene Antriebseinrichtung in der Form eines Servomotors aufweist, und wobei die Transporteinrichtungen (30) gleichartig ausgebildet sind, wobei die Vorrichtung beliebig zusammengestellte Behandlungseinheiten (6, 7) zum Behandeln von Kunststoffbehältnisse aufweist und wobei jede der Behandlungseinheiten (6, 7) zwischen zwei der Transporteinrichtungen (30) angeordnet ist, wobei zwischen der Umformungseinheit (2) und der Fülleinheit (4) wenigstens eine weitere Einheit (6, 7) zum Behandeln der Kunststoffbehältnisse (20) in die Vorrichtung (1) eingefügt ist, wobei diese weitere Einheit (6, 7) dazu eingerichtet und dafür vorgesehen ist, dass diese weitere Einheit (6, 7) zwischen zwei Transporteinrichtungen (30) angebracht ist, derart dass der Transportstrom der Kunststoffbehältnisse (20) zwischen der Umformungseinheit (2) und der Fülleinheit (4) über die weitere Einheit (6, 7) verläuft, wobei die Vorrichtung dazu eingerichtet und dafür vorgesehen ist, dass eine Etikettiereinheit (76) zum Etikettieren von Kunststoffbehältnissen (20) integriert ist, und wobei die Transporteinrichtungen (30) in der Lage sind die Behältnisse von der Umformungseinheit an die Fülleinheit weiterzuleiten, und wobei zwischen der Umformungseinheit (2) und der Fülleinheit (4) wenigstens eine Sterilisationseinheit (6) zum Sterilisieren der Behältnisse (20) mittels wenigstens zwei gleichartigen Transporteinrichtungen (30) eingebunden ist.

2. Vorrichtung nach Anspruch 1,
**dadurch gekennzeichnet, dass**
die Vorrichtung eine Steuerungseinrichtung (5) zum Steuern der Umformungseinheit (2) und der Fülleinheit (4) aufweist.

3. Vorrichtung nach Anspruch 2,
**dadurch gekennzeichnet, dass**
die Transporteinrichtung (30) eine Antriebseinrichtung (32) aufweist sowie einen Steuerungseingang, der mit einem Steuerungsausgang der Steuereinrichtung (5) verbindbar ist, um die Transporteinrichtung (30) in die Vorrichtung einzubinden.

4. Vorrichtung nach wenigstens einem der vorangegangenen Ansprüche,
**dadurch gekennzeichnet, dass**
die Transporteinrichtung (30) eine Vielzahl von an einem um eine vorgegebene Drehachse (X) drehbaren Träger (64) angeordneten Greifelementen (62) zum Greifen der Behältnisse (10) aufweist, wobei diese Greifelemente (62) wenigstens teilweise steuerbar sind.

5. Vorrichtung nach Anspruch 4,
**dadurch gekennzeichnet, dass**
die Greifelemente (62) in Abhängigkeit von einer Drehstellung des Trägers (64) bezüglich der Drehachse (X) steuerbar sind, wobei vorgegebene Steuerungspositionen (A, B) bezüglich der Drehstellung des Trägers (64) frei wählbar sind.

6. Vorrichtung nach wenigstens einem der vorangegangenen Ansprüche,
**dadurch gekennzeichnet, dass**
an dem Zuführbereich (22) und dem Abführbereich (24) der Umformungseinheit (2) sowie an dem Zuführbereich (42) und dem Abführbereich (44) der Fülleinheit jeweils eine Transporteinrichtung (30) angeordnet ist, wobei diese Transporteinrichtungen jeweils gleichartig ausgebildet sind.

7. Vorrichtung nach wenigstens einem der vorangegangenen Ansprüche,
**dadurch gekennzeichnet, dass**
die Transporteinrichtung (30) einen separaten Transportpfad zum Transportieren der Behältnisse aufweist.

8. Vorrichtung nach wenigstens einem der vorangegangenen Ansprüche,
**dadurch gekennzeichnet, dass**
die Transporteinrichtung (30) ein Transportstern (30) ist.

9. Vorrichtung nach wenigstens einem der vorangegangenen Ansprüche,
**dadurch gekennzeichnet, dass**
in wenigstens einem Zuführbereich (22, 42) oder wenigstens einem Abführbereich (24, 44) eine Transporteinrichtung (46) zum Transportieren der Behältnisse angeordnet ist.

10. Verfahren zum Zusammenstellen einer Vorrichtung (1) nach wenigstens einem der vorangegangenen Ansprüche mit den Schritten:
- Vorgabe einer bestimmten Produktanforderung;
- Ermittlung der für diese Produktanforderung nötigen Komponenten;
- Ausgabe einer Information, welche für die benötigten Komponenten charakteristisch ist, wobei diese Information auf Grundlage der Produktanforderung ermittelt wird,
- um die Vorrichtung mit beliebigen Behandlungseinheiten zum Behandeln von Behältnissen (20) unter Verwendung gleichartiger Transporteinrichtungen (30) zusammenzustellen.

11. Verfahren nach Anspruch 10,
**dadurch gekennzeichnet, dass**
die Produktanforderung wenigstens einen Parameter enthält, der für einen Reinheitsgrad im Inneren der herzustellenden Behältnisse (20) charakteristisch ist.

## Claims

1. An apparatus (1) for the production of containers (10) for liquid with a shaping unit (2), in order to shape plastic preforms (10) into plastic containers (20), and with a filling unit (4) for filling the plastic containers (20) with a liquid medium, wherein the filling unit (4) is arranged downstream with respect to the shaping unit (2) in a conveying direction (R) of the plastic containers, wherein the shaping unit (2) has a supply region (22) for supplying the plastic preforms (10) as well as a discharge region (24) in order to discharge the plastic containers (20) out of the shaping unit (2), and wherein the filling unit (4) has a supply region (42) for supplying the plastic containers (20) to the filling unit (4) and a discharge region (44) for discharging the plastic containers (20) out of the filling unit (4),
**characterized in that**
a plurality of conveying devices (30) serving as an interface is arranged between the discharge region (24) of the shaping unit (2) and the supply region (42) of the filling unit (4), which transport the plastic containers (20) at least in sections and individually between the shaping unit (2) and the filling unit (4), wherein each conveying device comprises its own drive unit in the form of a servomotor, and wherein the conveying devices (30) are constructed in the same way, wherein the apparatus comprises treatment units (6, 7) for treating plastic containers which are assembled as desired, and wherein each of the treatment units (6, 7) is arranged between two of the conveying devices (30), wherein at least one further unit (6, 7) for treating the plastic containers (20) is inserted into the apparatus (1) between the shaping unit (2) and the filling unit (4), said further unit (6, 7) being arranged and intended to be arranged between two conveying devices (30) in such a way that the conveying flow of the plastic containers (20) between the shaping unit (2) and the filling unit (4) passes over the further unit (6, 7), the apparatus being arranged and intended to be arranged that a labelling unit (76) for labelling plastic containers (20) is integrated, and wherein the conveying devices (30) are capable of forwarding the containers from the shaping unit to the filling unit, and wherein at least one sterilisation unit (6) for sterilising the containers (20) by means of at least two similar conveying devices (30) is integrated between the shaping unit (2) and the filling unit (4).

2. The apparatus according to claim 1,
**characterized in that**
the apparatus has a control device (5) for controlling the shaping unit (2) and the filling unit (4).

3. The apparatus according to claim 2,
**characterized in that**
the conveying device (30) has a drive unit (32) as well as a control input which is capable of being connected to a control output of the control device (5) in order to integrate the conveying device (30) into the apparatus.

4. The apparatus according to at least one of the preceding claims, **characterized in that**
the conveying device (30) has a plurality of gripping elements (62) arranged on a carrier (64) rotatable around a pre-set axis of rotation (X) in order to grip the containers (10), wherein these gripping elements (62) are capable of being controlled at least in part.

5. The apparatus according to claim 4,
**characterized in that**
the gripping elements (62) are capable of being controlled in a manner dependent upon a rotational setting of the carrier (64) with respect to the axis of rotation (X), wherein pre-set control positions (A, B) are capable of being freely selected with respect to the rotational setting of the carrier (64).

6. The apparatus according to at least one of the preceding claims, **characterized in that**
a conveying device (30) is arranged in each case at the supply region (22) and the discharge region (24) of the shaping unit (2) as well as at the supply region (42) and the discharge region (44) of the filling unit, wherein these conveying devices are designed in a similar manner in each case.

7. The apparatus according to at least one of the preceding claims, **characterized in that**
the conveying device (30) has a separate conveying path for conveying the containers.

8. The apparatus according to at least one of the preceding claims, **characterized in that**
the conveying device (30) is a conveying star wheel (30).

9. The apparatus according to at least one of the preceding claims, **characterized in that**
a conveying device (46) for conveying the containers is arranged in at least one supply region (22, 42) or at least one discharge region (24, 44).

10. A method of assembling an apparatus (1) according to at least one of the preceding claims with the steps:
- submission of a specific product requirement;
- determination of the components necessary for this product requirement;
- issue of information which is characteristic of the necessary components, wherein this information is ascertained on the basis of the product requirement,
- to assemble the apparatus with any treatment units for treating containers (20) using similar conveying devices (30).

11. The method according to claim 10,
**characterized in that**
the product requirement contains at least one parameter which is characteristic of a degree of purity in the interior of the containers (20) to be produced.

## Revendications

1. Dispositif (1) pour fabriquer des contenants de liquide (10) avec une unité de façonnage (2), pour façonner des préformes en plastique (10) en contenants en plastique (20), et avec une unité de remplissage (4) pour remplir les contenants en plastique (20) d'un milieu liquide, dans lequel l'unité de remplissage (4) est disposée dans une direction de transport (R) des contenants en plastique en aval par rapport à l'unité de façonnage (2), dans lequel l'unité de façonnage (2) présente une zone d'amenée (22) pour amener les préformes en plastique (10), ainsi qu'une zone d'évacuation (24), pour évacuer les contenants en plastique (20) de l'unité de façonnage (2) et dans lequel l'unité de remplissage (4) présente une zone d'amenée (42) pour amener les contenants en plastique (20) à l'unité de remplissage (4) et une zone d'évacuation (44) pour évacuer les contenants en plastique (20) de l'unité de remplissage (4),
**caractérisé en ce que**
plusieurs systèmes de transport (30) servant d'interface, lesquels transportent les contenants en plastique (20) au moins sur certaines parties et un à un entre l'unité de façonnage (2) et l'unité de remplissage (4), sont disposés entre la zone d'évacuation (24) de l'unité de façonnage (2) et la zone d'amenée (42) de l'unité de remplissage (4), dans lequel chaque système de transport présente un système d'entraînement propre sous la forme d'un servomoteur, et dans lequel les systèmes de transport (30) sont réalisés de manière similaire, dans lequel le dispositif présente des unités de traitement (6, 7) regroupées de manière quelconque pour traiter des contenants en plastique et dans lequel chacune des unités de traitement (6, 7) est disposée entre deux des systèmes de transport (30), dans lequel au moins une autre unité (6, 7) pour traiter les contenants en plastique (20) est insérée dans le dispositif (1) entre l'unité de façonnage (2) et l'unité de remplissage (4), dans lequel cette autre unité (6, 7) est conçue et prévue pour que cette autre unité (6, 7) soit montée entre deux systèmes de transport (30), de telle sorte que le flux de transport des contenants en plastique (20) entre l'unité de façonnage (2) et l'unité de remplissage (4) passe par l'autre unité (6, 7), dans lequel le dispositif est conçu et prévu pour qu'une unité d'étiquetage (76) pour étiqueter des contenants en plastique (20) soit intégrée, et dans lequel les systèmes de transport (30) sont en mesure de transférer les contenants de l'unité de façonnage sur l'unité de remplissage, et dans lequel au moins une unité de stérilisation (6) pour stériliser les contenants (20) est intégrée entre l'unité de façonnage (2) et l'unité de remplissage (4) au moyen d'au moins deux systèmes de transport (30) similaires.

2. Dispositif selon la revendication 1,
**caractérisé en ce que**
le dispositif présente un système de commande (5) pour commander l'unité de façonnage (2) et l'unité de remplissage (4).

3. Dispositif selon la revendication 2,
**caractérisé en ce que**
le système de transport (30) présente un système d'entraînement (32) ainsi qu'une entrée de commande, qui peut être reliée à une sortie de commande du système de commande (5), afin d'intégrer le système de transport (30) dans le dispositif.

4. Dispositif selon au moins l'une des revendications précédentes, **caractérisé en ce que**
le système de transport (30) présente une pluralité d'éléments de préhension (62) disposés sur un support (64) pouvant tourner autour d'un axe de rotation (X) prédéfini pour saisir les contenants (10), dans lequel ces éléments de préhension (62) peuvent être commandés au moins en partie.

5. Dispositif selon la revendication 4,
**caractérisé en ce que**
les éléments de préhension (62) peuvent être commandés en fonction d'une position de rotation du support (64) par rapport à l'axe de rotation (X), dans lequel des positions de commande (A, B) prédéfinies par rapport à la position de rotation du support (64) peuvent être sélectionnées librement.

6. Dispositif selon au moins l'une des revendications précédentes, **caractérisé en ce que**
respectivement un système de transport (30) est disposé sur la zone d'amenée (22) et la zone d'évacuation (24) de l'unité de façonnage (2) ainsi que sur la zone d'amenée (42) et la zone d'évacuation (44) de l'unité de remplissage, dans lequel ces systèmes de transport sont réalisés respectivement de façon similaire.

7. Dispositif selon au moins l'une des revendications précédentes, **caractérisé en ce que**
le système de transport (30) présente un chemin de transport séparé pour transporter les contenants.

8. Dispositif selon au moins l'une des revendications précédentes, **caractérisé en ce que**
le système de transport (30) est un système de transport en étoile (30).

9. Dispositif selon au moins l'une des revendications précédentes, **caractérisé en ce que**
un système de transport (46) pour transporter les contenants est disposé dans au moins une zone d'amenée (22, 42) ou au moins une zone d'évacuation (24, 44).

10. Procédé pour regrouper un dispositif (1) selon au moins l'une des revendications précédentes avec les étapes :
- de prédéfinition d'une demande de produit définie ;
- de détermination des composants nécessaires à cette demande de produit ;
- de délivrance d'une information, laquelle est caractéristique des composants nécessaires, dans lequel cette information est déterminée sur la base de la demande de produit,
- afin de regrouper le dispositif avec des unités de traitement quelconques pour traiter des contenants (20) au moyen de systèmes de transport (30) similaires.

11. Procédé selon la revendication 10,
**caractérisé en ce que**
la demande de produit contient au moins un paramètre, qui est caractéristique d'un degré de pureté à l'intérieur des contenants (20) à fabriquer.
